# EUROPÄISCHE PATENTSCHRIFT

(11) **EP 2 052 893 B1**
(45) Veröffentlichungstag und Bekanntmachung des Hinweises auf die Patenterteilung: **15.09.2010**
(21) Anmeldenummer: 08405313.1
(22) Anmeldetag: 22.12.2008
(51) Int. Cl.: B60H 1/28, B62D 25/08, B62D 25/24

(54) **Wasserkasten für ein Kraftfahrzeug und Kraftfahrzeug mit einem solchen Wasserkasten**
Water chamber for a motor vehicle and motor vehicle with such a water chamber
Réservoir d'eau pour un véhicule automobile et véhicule automobile doté d'un tel réservoir d'eau

(43) Veröffentlichungstag der Anmeldung: 29.04.2009
(60) Teilanmeldung: 10007709.8
(73) Patentinhaber: Weidmann Plastics Technology AG, 8640 Rapperswil (CH)
(72) Erfinder: Bölsterli, Christian, 8627 Grüningen (CH); Dal Vecchio, Piero, 8725 Ernetschwill (CH); Lazarus, Dirk, 8853 Lachen (CH); Novak, Philippe, 8320 Fehraltorf (CH)
(74) Vertreter: Groner, Manfred

(56) Entgegenhaltungen:
- EP-A- 1 977 958
- DE-A1- 4 105 031
- DE-A1- 19 810 861
- DE-A1-102005 045 292
- DE-A1-102007 013 690
- DE-B3-102004 055 259
- DE-C1- 3 942 290
- DE-C1- 4 234 045
- DE-C1- 19 756 983
- JP-A- 53 100 526
- JP-A- 60 203 521

## Beschreibung

Die Erfindung betrifft einen Wasserkasten für ein Kraftfahrzeug nach dem Oberbegriff des Anspruchs 1.

Wasserkästen dieser Art sind in zahlreichen Ausführungen bekannt geworden. Sie dienen in erster Linie dazu, Schwallwasser abzuleiten, das entlang der Windschutzscheibe abfliesst. Der hierbei entstehende Wasserstrom kann beispielsweise bei starkem Regenfall oder in einer Waschanlage sehr erheblich sein. Solche Wasserkästen können auch verwendet werden, um aus einer Frischluftzufuhr Wasser abzuscheiden. Ein solcher Wasserkasten ist dann gleichzeitig auch ein Luftansaugkasten. Im Innenraum des Wasserkastens wird die Frischluft zur Wasserabscheidung umgelenkt.

Ein Wasserkasten dieser Gattung ist im Stand der Technik aus der DE-A-10 2007 013 690 bekannt geworden. Die Auslassöffnung zum Ableiten von Wasser weist eine Klappe auf, mit welcher die Auslassöffnung verschlossen werden kann. Gemäss einer aufwändigen Ausführungsform ist die Klappe elektrisch bzw. elektronisch gesteuert.

Ein weiterer Wasserkasten ist aus der EP-A-1 977 958 bekannt geworden. Zur Ableitung des Wassers aus dem Innenraum des Wasserkastens besitzt dieser seitlich Öffnungen. Diese Öffnungen sind jeweils mit einem Einwegventil versehen, die jeweils eine Klappe aufweisen, welche bei einem Überdruck im Wasserkasten nach aussen verschwenkt werden und dadurch die Öffnung zum Abfliessen des Wassers vergrössert wird. Der Wasserkasten besitzt auch Öffnungen für die Zufuhr von Frischluft zum Fahrgastraum.

Der Erfindung kann die Aufgabe zugrunde gelegt werden, einen Wasserkasten der genannten Art zu schaffen, der noch funktionssicherer ist.

Die Aufgabe ist gemäss Anspruch 1 gelöst. Das Aggregat kann beispielsweise ein Ventil, ein Ventilator, ein Motor, eine Heizvorrichtung oder eine Klappe sein. Es können auch mehrere Aggregate angesteuert werden. Mit einem solchen Druckmessmittel kann auf Störungen, die durch eine Druckänderung im Wasserkasten zurückzuführen sind, exakt und schneller als bisher reagiert werden. Beispielsweise kann aufgrund einer Druckmessung mittels eines Ventils eine Auslassöffnung geöffnet oder geschlossen werden. Über das genannte Druckmessmittel kann aber beispielsweise auch ein Ventilator gesteuert werden. Weiter ist es beispielsweise möglich, aufgrund einer solchen Druckmessung die Einlassöffnung zu verändern, beispielsweise durch Erwärmen mit einem Heizelement Schnee oder Eis zu schmelzen oder mittels eines Aggregates, beispielsweise eines Motors oder einer Klopfvorrichtung ein Gitter, eine Klappe oder ein Filter der Einlassöffnung zu bewegen. Damit kann die Einlassöffnung wieder durchgängig gemacht werden, wenn diese beispielsweise durch Schnee, Eis oder Laub verstopft sein sollte. Somit kann die Luftzufuhr zum Innenraum des Wasserkastens gewährleistet und ein unerwünscht hoher Unterdruck im Wasserkasten vermieden werden. Möglich ist auch ein Freiblasen mit einem Gebläse, der Einlassöffnung mit einem Motor oder Freischütteln. Weiter können aufgrund eines solchen Druckmessmittels beispielsweise Klappen in einem Luftkanal geöffnet oder geschlossen werden. Insgesamt ermöglicht der Wasserkasten gemäss der vorliegenden Anmeldung Störungen, welche sich durch eine Änderung des Druckes im Innenraum des Wasserkastens bemerkbar machen, durch entsprechende Massnahmen zu eliminieren oder zumindest zu mindern.

Das wenigstens eine Druckmessmittel ist in der Bodenwand in der Auslassöffnung angeordnet, so dass mit diesem ein Wasserdruck gemessen werden kann. Das wenigstens eine Druckmessmittel ist so angeordnet, dass innerhalb eines Stutzens ein Wasserdruck gemessen werden kann, wenn dieser Stutzen wenigstens teilweise mit Wasser gefüllt ist. Aufgrund des gemessenen Wasserdruckes kann ein Ventil geöffnet und dadurch Wasser aus diesem Stutzen abgeleitet werden.

Das Druckmessmittel kann in an sich bekannter Weise ausgebildet sein. Beispielsweise ist das Druckmessmittel als elektrischer Sensor oder als mechanisches Messmittel mit einer Membran ausgebildet.

Die Erfindung betrifft zudem ein Kraftfahrzeug mit einem erfindungsgemässen Wasserkasten. Bei diesem ist vorzugsweise vorgesehen, dass der Wasserkasten über einen Luftkanal mit einem in einem Frontbereich des Kraftfahrzeuges angeordneten Lufteinlass verbunden ist. Das Aggregat ist in diesem Fall vorzugsweise so ausgebildet, dass aufgrund einer Druckmessung der Luftdurchlass in diesem Kanal veränderbar ist. Das Aggregat ist beispielsweise als Ventil ausgebildet, mit dem der Luftdurchlass verändert werden kann. Die Veränderung erfolgt beispielsweise bei einem Unterdruck oder einem Überdruck im Innenraum des Wasserkastens.

Nach einer Weiterbildung der Erfindung ist vorgesehen, dass der Stutzen mit einem Sensor ein Bauteil bildet. Zudem ist nach einer Weiterbildung der Erfindung vorgesehen, dass der Wasserkasten eine steuerbare Klappe als Ventil für die Luftzufuhr in den Innenraum aufweist.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung erläutert:

Es zeigen:
- Figur 1: schematisch einen Querschnitt durch einen erfindungsgemässen Wasserkasten,
- Figur 2: schematisch einen Querschnitt durch einen Wasserkasten gemäss einer
- Variante,
- Figur 3: schematisch einen Querschnitt durch einen Wasserkasten gemäss einer weiteren Variante der Erfindung,
- Figur 4: schematisch einen Teilschnitt durch den vorderen Bereich eines Kraftfahrzeuges mit eingebautem Wasserkasten und
- Figur 5: schematisch ein Querschnitt durch einen Wasserkasten nach einer weiteren Variante.

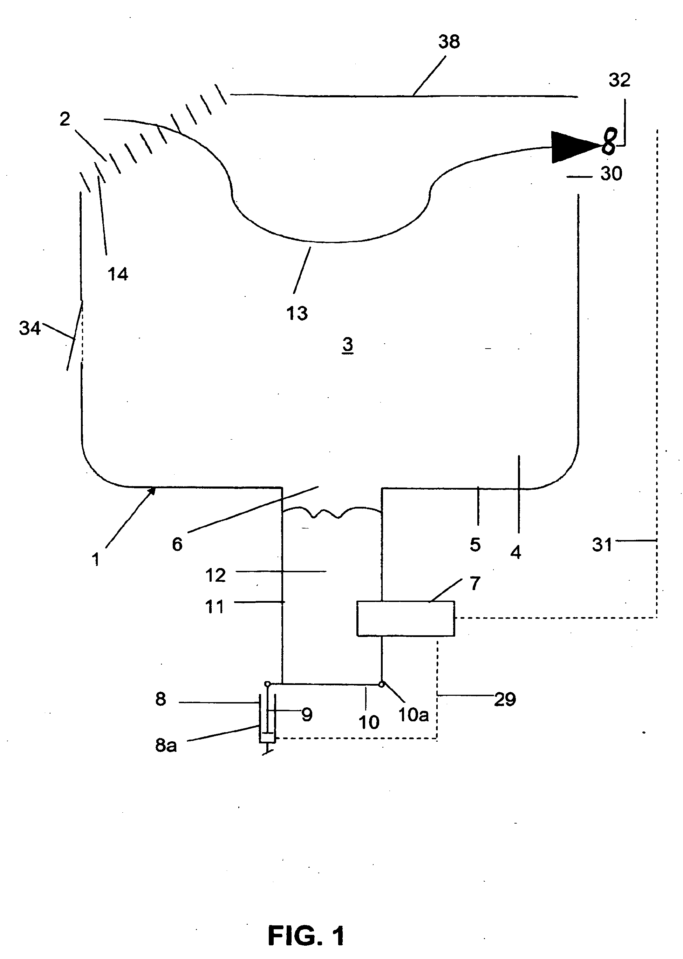

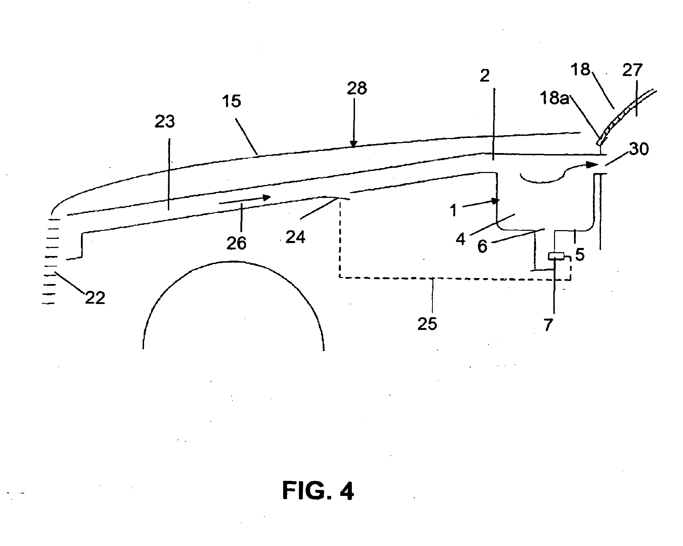

Der in Figur 1 gezeigte Wasserkasten 1 ist gemäss Figur 4 in einem Kraftfahrzeug 28 unterhalb einer Motorhaube 15 angeordnet. Der Wasserkasten 1 befindet sich unterhalb einer Scheibenunterkante 18a einer Frontscheibe 18, so dass von der Frontscheibe 18 abfliessendes Wasser durch eine Einlassöffnung 2 in einen Innenraum 3 des Wasserkastens 1 abfliessen kann. Die Einlassöffnung 2 ist von einem Gitter 14 abgedeckt, so dass Laub und grössere Gegenstände nicht in den Innenraum 3 gelangen können. Die Einlassöffnung 2 befindet sich in einer Deckenwand 38, welche eine Wasserkastenabdeckung bildet. Das Gitter 14 kann zum Entfernen von eventuell vorhandenen, die Öffnungen 2 verstopfenden Gegenständen mit einem hier nicht gezeigten Antrieb bewegt werden. Denkbar ist auch eine Heizvorrichtung zum Schmelzen von Eis und Schnee. Möglich wäre beispielsweise ein Heizdraht im Gitter 14.

Der Wasserkasten 1 ist in üblicher Weise aus Kunststoff hergestellt und besitzt eine wannenförmige Vertiefung 4 mit einer Bodenwand 5. Die Vertiefung 4 erstreckt sich ebenfalls vorzugsweise entlang der Scheibenunterkante 18a. Von der Frontscheibe 18 abfliessendes Wasser kann somit in die Vertiefung 4 gelangen. Damit dieses Wasser abfliessen kann, ist in der Bodenwand 5 wenigstens eine Auslassöffnung 6 angeordnet. Die Auslassöffnung 6 führt in einen sich nach unten erstreckenden rohrförmigen Stutzen 11. Die Öffnung 6 kann trichterförmig oder dergleichen ausgebildet sein, so dass das Wasser aus der Vertiefung 4 vollständig in den Stutzen 11 fliessen kann. Die Öffnung 6 ist am unteren Ende des Stutzens 11 mit einem Ventil 8 verschlossen. Dieses Ventil 8 besitzt einen Verschlusskörper 10, der mit einem Antriebsmittel 8a um ein Gelenk 10a verschwenkbar ist. Der Antrieb 8a ist beispielsweise als Stellzylinder ausgebildet und besitzt einen Kolben 9, der am Verschlusskörper 10 angreift. Anstelle eines Stellzylinders wäre beispielsweise auch ein Hubmagnet denkbar. Der Verschlusskörper 10 ist hier beispielsweise als Klappe ausgebildet. Anstelle eines einzigen Stutzens 11 können jedoch auch mehrere Stutzen 11 vorgesehen sein.

Der Antrieb 8a ist über eine Signalleitung 29 mit einem Druckmessmittel 7 verbunden. Dieses ist wie in Figur 1 ersichtlich am Stutzen 11 angeordnet. Das Druckmessmittel 7 ist beispielsweise ein elektrischer Sensor oder ein ans sich bekanntes mechanisches Druckmessmittel. Befindet sich im Stutzen 11 Wasser 12, so kann mit dem Druckmessmittel der Wasserdruck im Wasser 12 gemessen werden. Übersteigt dieser Druck einen bestimmten Wert, so sendet das Druckmessmittel 7 an den Antrieb 8a ein Signal, aufgrund dessen das Ventil 8 geöffnet wird. Das Wasser 12 kann nun durch das geöffnete Ventil 8 aus dem Stutzen 11 abfliessen. Ist das Wasser abgeflossen, so sinkt entsprechend der Druck im Stutzen 11. Wird ein vorbestimmter Wert unterschritten, so wird aufgrund eines weiteren Signals das Ventil 8 wieder geschlossen. Das Druckmessmittel 7 kann somit durch Steuerung des Ventils 8 verhindern, dass der Innenraum 3 beispielsweise bei starkem Regenfall überflutet wird. Wasser könnte hierbei in eine Öffnung 30 gelangen, welche den Innenraum 3 gemäss Figur 4 mit einem Fahrgastraum 27 verbindet. Durch die beschriebene Steuerung des Ventils 8 aufgrund einer Druckmessung im Stutzen 11 kann dies zuverlässig verhindert werden. Der Stutzen hat den besonderen Vorteil, dass sich in diesem Wasser mit einer vergleichsweise kleinen Oberfläche sammeln kann. Von der durchströmenden Luft wird dadurch wenig Wasser aufgenommen.

Der Stutzen 11 kann mit dem Sensor 7 als Bauteil hergestellt und beispielsweise mittels einer hier nicht gezeigten Rastverbindung an der Bodenwand 5 befestigt sein. Dies hat den Vorteil, dass der Sensor 7 notfalls einfach ausgetauscht werden kann. Die Herstellung ist dann besonders kostengünstig, wenn der Sensor 7 in ein Spritzgusswerkzeug eingelegt und der Stutzen 11 an den Sensor 7 angespritzt wird. Die Länge des Stutzens 11 beträgt vorzugsweise wenigstens 3 cm und der Durchmesser vorzugsweise 4 cm.

Entsteht im Innenraum 3 bei besonderen Strömungsverhältnissen ein Unterdruck bzw. ein Vakuum, so sinkt entsprechend der vom Druckmessmittel 7 gemessene Druck. Einem solchen Unterdruck kann entgegengewirkt werden, indem ein nach der Öffnung 30 angeordneter Ventilator 32 zu einer kleineren Leistung angetrieben wird. Diese Leistungsverminderung erfolgt über ein entsprechendes Signal, das vom Druckmessmittel 7 über eine weitere Signalleitung 31 an den Ventilator 32 abgegeben wird. Die Messung des Luftdruckes im Innenraum 3 kann auch über ein weiteres hier nicht gezeigtes Druckmessmittel erfolgen, das weiter oben über der Öffnung 6 angeordnet sein kann. Das in Figur 1 gezeigte Druckmessmittel 7 kann ebenfalls weiter oben über der Öffnung 6 angeordnet sein. Denkbar ist auch eine Ausführung, bei welcher lediglich der Luftdruck im Innenraum 3 gemessen und aufgrund der entsprechenden Messung der Ventilator 2 gesteuert wird. Das Druckmessmittel 7 ist vorzugsweise so ausgebildet, dass es sowohl einem Überdruck als auch einen Unterdruck messen kann. Das Medium kann sowohl Luft als auch Wasser sein.

Die Figur 1 zeigt mit einem Pfeil 13 einen möglichen Weg der Frischluft von der Einlassöffnung 2 zur Öffnung 30. Die entsprechende Luftströmung kann durch eine höhere Leistung des Ventilators 32 verstärkt oder durch eine geringere Leistung des Ventilators 32 entsprechend verkleinert werden. Aufgrund der Messung des Druckmessmittels 7 kann somit diese Strömung gesteuert bzw. reguliert werden. Zur Verminderung eines Unterdruckes im Innenraum 3 kann eine Klappe 34 geöffnet werden, die über eine hier nicht gezeigte Signalleitung mit dem Sensor 7 verbunden ist.

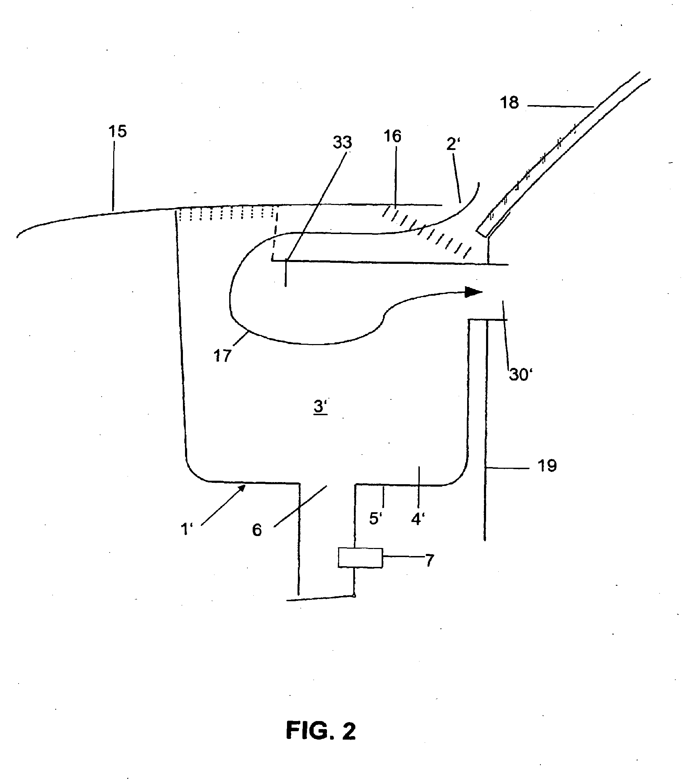

Die Figur 2 zeigt einen Wasserkasten 1', der einen Innenraum 3' aufweist, der eine Umlenkkammer für die Frischluftzufuhr bildet. Die Frischluft wird durch eine Einlassöffnung 2' angesaugt und umströmt eine Leitwand 33, auch Schwallwand genannt, wie dies mit dem Pfeil 17 angedeutet ist. Die Frischluft scheidet hierbei Wasser ab und gelangt entsprechend in trocknerem Zustand zu einer Öffnung 30', die zum Fahrgastraum 27 führt. Die Öffnung 30' führt hierbei durch eine Trennwand 19 hindurch, welche den Fahrgastraum 27 gegenüber dem Motorenraum abtrennt. Der Innenraum 3' besitzt ebenfalls eine Vertiefung 4' mit einer Bodenwand 5'. Das Druckmessmittel 7 kann wie oben erwähnt ausgebildet und somit ebenfalls über die genannte Signalleitung 31 mit dem genannten Ventilator 32 verbunden sein. Anstelle der Signalleitung 31 ist hier selbstverständlich auch eine berührungslose Signalübertragung möglich. Die Einlassöffnung 2' dient für den Einlass von Schwallwasser, das an der Frontscheibe. 18 nach unten abfliesst. Ebenfalls kann hier ein Gitter 16 vorhanden sein, welches verhindert, dass grössere Gegenstände in den Innenraum 3' gelangen können. Anstelle des Gitters 16 kann alternativ auch ein Gitter 16' vorgesehen sein, das an oder unterhalb der Motorhaube 15 angeordnet ist und Einlassöffnungen 2" besitzt. Die Gitter 16 und 16' können ebenfalls mit einem hier nicht gezeigten Antrieb bewegt werden, um eventuell das Gitter 16 bzw. 16' verstopfende Gegenstände zu entfernen.

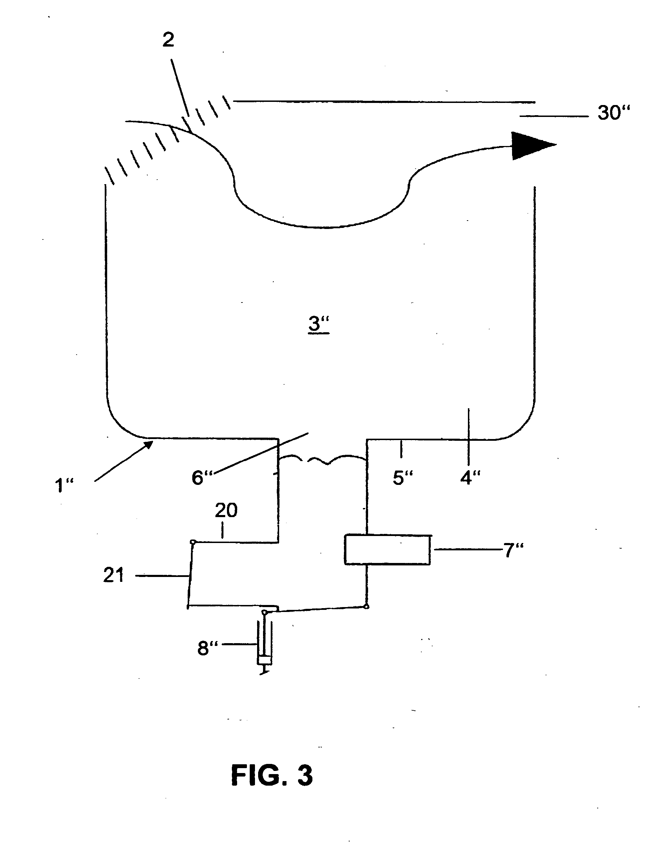

Der in Figur 3 gezeigte Wasserkasten 1" entspricht im Wesentlichen dem Wasserkasten 1 gemäss der Figur 1. Dieser besitzt somit ebenfalls einen Innenraum 3", eine wannenförmige Vertiefung 4", eine Bodenwand 5" und eine Auslassöffnung 6" für Schwallwasser. Zusätzlich ist beim Wasserkasten 1" ein Seitenstutzen 20 vorgesehen, der mit einer Klappe 21 verschliessbar ist. Fliesst vergleichsweise wenig Schwallwasser in den Innenraum 3", so wird aufgrund des Wasserdruckes die Klappe 21 nach dem Überschreiten eines bestimmten Druckes verschwenkt und dadurch der Seitenstutzen 20 geöffnet. Dieser Wasserdruck wird wie oben erwähnt durch das Druckmessmittel 7" gemessen. Überschreitet der Wasserdruck einen bestimmten Wert, so sendet das Druckmessmittel 7" an das Ventil 8" ein Signal, wodurch das Ventil 8" geöffnet wird. Das Wasser kann dann gleichzeitig durch den Seitenstutzen 20 und durch das Ventil 8" abfliessen.

Das in Figur 4 gezeigte Kraftfahrzeug 28 besitzt eine Frontöffnung 22 beispielsweise in oder hinter einem Kühlergrill, durch welche Luft in einen Luftkanal 23 gelangen kann. Dieser Luftkanal 23 ist mit dem oben erwähnten Wasserkasten 1 verbunden. Luft kann somit gemäss Pfeil 26 von der Öffnung 22 in den Wasserkasten 1 gelangen. Im Luftkanal 26 ist eine Klappe 24 angeordnet, die über eine Signalleitung 25 mit dem Druckmessmittel 7 verbunden ist. Das Druckmessmittel 7 misst den Luftdruck im Wasserkasten 1. Das Druckmessmittel 7 kann entsprechend auch weiter oben in der Vertiefung 4 angeordnet sein. Aufgrund des ermittelten Luftdruckes wird über die Signalleitung 25 die Klappe 24 gesteuert. Indem die Klappe 24 entsprechend gestellt wird, kann der Zustrom von Luft zum Wasserkasten 1 gesteuert bzw. geregelt werden. Die Klappe 24 kann an sich als beliebiges Ventil ausgebildet sein, das einen entsprechenden Antrieb bzw. einen Stellantrieb besitzt, mit dem der Verschlusskörper betätigt werden kann. Die Frontöffnung 22 ist mit einer Klappe 35 versehen, so dass der Durchschnitt von Luft durch die Frontöffnung 22 in den Luftkanal 23 steuerbar ist. Die Klappe 35 ist mit einem hier nicht gezeigten Antrieb bewegbar, welcher über eine Signalleitung 36 mit dem Drucksensor 7 verbunden ist.

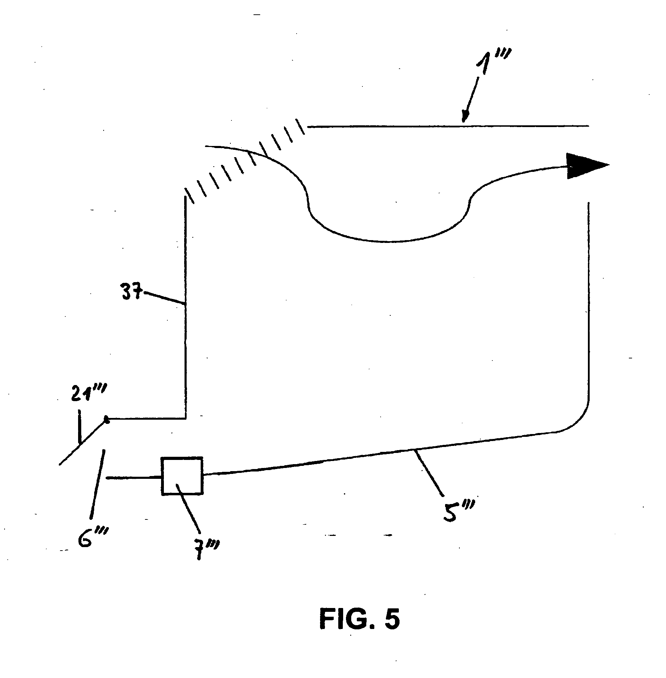

Der in Figur 5 gezeigte Wasserkasten 1"' besitzt eine Auslassöffnung 6'", die in einer Seitenwand 37 angeordnet ist. Eine Bodenwand 5'" ist zur Horizontalen zur Auslassöffnung 6"' hin geneigt, so dass Wasser im Wasserkasten 1"' vollständig zur Auslassöffnung 6'" fliesst. Unmittelbar vor der Auslassöffnung 6'" ist ein Drucksensor 7'" angeordnet, mit dem eine Klappe 21'" steuerbar ist. Der Drucksensor 7'" bestimmt den Wasserdruck und öffnet über ein entsprechendes Signal die Klappe 21'", sobald ein bestimmter Wasserdruck ermittelt wird.

### BEZUGSZEICHENLISTE

- 1: Wasserkasten
- 2: Einlassöffnung
- 3: Innenraum
- 4: Vertiefung
- 5: Bodenwand
- 6: Auslassöffnung
- 7: Druckmessmittel
- 8: Ventil
- 8a: Antrieb
- 9: Kolben
- 10: Verschlusskörper
- 10a: Gelenk
- 11: Stutzen
- 12: Wasser
- 13: Pfeil
- 14: Gitter
- 15: Motorhaube
- 16: Gitter
- 16': Gitter (in der Motorhaube)
- 17: Pfeil
- 18: Frontscheibe
- 18a: Scheibenunterkante
- 19: Trennwand
- 20: Seitenstutzen
- 21: Klappe
- 22: Frontöffnung
- 23: Luftkanal
- 24: Klappe
- 25: Signalleitung
- 26: Pfeil
- 27: Fahrgastraum
- 28: Kraftfahrzeug
- 29: Signalleitung
- 30: Öffnung
- 31: Signalleitung
- 32: Ventilator
- 33: Leitwand
- 34: Klappe
- 35: Klappe
- 36: Signalleitung
- 37: Seitenwand
- 38: Deckenwand

## Patentansprüche

1. Wasserkasten für ein Kraftfahrzeug (28), mit einer in Einbaulage oben liegenden Einlassöffnung (2), einem in Einbaulage unter der Einlassöffnung (2) angeordneten Innenraum (3) mit wenigstens einer wannenförmigen Vertiefung (4), die eine Bodenwand (5) aufweist, in welcher wenigstens einen Vertiefung (4) wenigstens eine Auslassöffnung (6) zum Ableiten von Wasser angeordnet ist, **dadurch gekennzeichnet, dass** er wenigstens ein Druckmessmittel (7) zum Steuern wenigstens eines Aggregates (8, 32, 24) aufweist, dass das wenigstens eine Druckmessmittel (7) in der Bodenwand (5), in der wenigstens einen Auslassöffnung (6) angeordnet ist, dass die wenigstens eine Auslassöffnung (6) einen Stutzen (11) aufweist und dass das wenigstens eine Druckmessmittel (7) in diesem Stutzen (11) angeordnet ist.

2. Wasserkasten nach Anspruch 1, **dadurch gekennzeichnet, dass** das Druckmessmittel (7) im genannten Innenraum (3) angeordnet oder mit diesem verbunden ist.

3. Wasserkasten nach Anspruch 1 oder 2, **dadurch gekennzeichnet, dass** das wenigstens eine Aggregat (8) ein Ventil ist, mit dem ein Ableiten des Wassers aus dem Wasserkasten (1) steuerbar ist.

4. Wasserkasten nach einem der Ansprüche 1 bis 3, **dadurch gekennzeichnet, dass** mit dem wenigstens einen Druckmessmittel (7) ein Luftdruck im genannten Innenraum (3) messbar ist.

5. Wasserkasten nach Anspruch 4, **dadurch gekennzeichnet, dass** das wenigstens eine Druckmessmittel (7) ein elektrischer Sensor oder ein mechanisches Druckmessmittel ist.

6. Wasserkasten nach einem der Ansprüche 1 bis 5 **dadurch gekennzeichnet, dass** mit dem wenigstens einen Druckmessmittel (7) eine Lüftungsanlage (32) und insbesondere ein Ventilator steuerbar ist.

7. Wasserkasten nach einem der Ansprüche 1 bis 6, **dadurch gekennzeichnet, dass** die Einlassöffnung (2) ein Gitter (14) aufweist und dass mit dem genannten Aggregat wenigstens eine Eigenschaft des Gitters (14) bzw. der Einlassöffnung (2) veränderbar ist.

8. Wasserkasten nach Anspruch 7, **dadurch gekennzeichnet, dass** das Gitter (14) mit dem Aggregat beheizbar, bewegbar oder auf eine andere Weise veränderbar ist.

9. Wasserkasten nach einem der Ansprüche 1 bis 8, **dadurch gekennzeichnet, dass** er eine weitere Öffnung (30) für die Frischluftzufiihrung zu einem Fahrgastraum (27) aufweist.

10. Wasserkasten nach Anspruch 9, **dadurch gekennzeichnet, dass** der Innenraum (3') eine Umlenkkammer zum Ausscheiden von Wasser aus der durchströmenden Luft bildet.

11. Kraftfahrzeug mit einem Wasserkasten (1) nach einem der Ansprüche 1 bis 10, **dadurch gekennzeichnet, dass** der Wasserkasten (1) über einen Luftkanal (23) mit einem in einem Frontbereich des Kraftfahrzeuges angeordneten Lufteinlass (22) verbunden ist und dass mit dem genannten Aggregat (24) der Luftdurchlassin diesem Kanal (23) steuerbar ist.

12. Kraftfahrzeug nach Anspruch 11, **dadurch gekennzeichnet, dass** das Aggregat (35, 24) eine Luftklappe aufweist und dass diese Luftklappe aufgrund des Innendruckes im genannten Innenraum (3) steuerbar ist.

## Claims

1. Water chamber for a motor vehicle (28), with an inlet opening (2) which is located at the top in the installed position, an interior space (3) which is arranged under the inlet opening (2) in the installed position and has at least one trough-shaped depression (4) which has a bottom wall (5), in which at least one depression (4) at least one outlet opening (6) for draining away water is arranged, **characterized in that** said water chamber has at least one pressure-measuring means (7) for controlling at least one unit (8, 32, 24), **in that** the at least one pressure-measuring means (7) is arranged in the bottom wall (5), in the at least one outlet opening (6), **in that** the at least one outlet opening (6) has a connecting pipe (11), and **in that** the at least one pressure-measuring means (7) is arranged in said connecting pipe (11).

2. Water chamber according to Claim 1, **characterized in that** the pressure-measuring means (7) is arranged in the interior space (3) mentioned or is connected thereto.

3. Water chamber according to Claim 1 or 2, **characterized in that** the at least one unit (8) is a valve with which draining away of the water from the water chamber (1) can be controlled.

4. Water chamber according to one of Claims 1 to 3, **characterized in that** an air pressure in the interior space (3) mentioned can be measured with the at least one pressure-measuring means (7).

5. Water chamber according to Claim 4, **characterized in that** the at least one pressure-measuring means (7) is an electric sensor or a mechanical pressure-measuring means.

6. Water chamber according to one of Claims 1 to 5, **characterized in that** a ventilation system (32) and in particular a ventilator can be controlled with the at least one pressure-measuring means (7).

7. Water chamber according to one of Claims 1 to 6, **characterized in that** the inlet opening (2) has a grid (14), and **in that** at least one property of the grid (14) or of the inlet opening (2) can be changed with the unit mentioned.

8. Water chamber according to Claim 7, **characterized in that** the grid (14) is heatable, movable or changeable in another way with the unit.

9. Water chamber according to one of Claims 1 to 8, **characterized in that** it has a further opening (30) for supplying fresh air to a passenger compartment (27).

10. Water chamber according to Claim 9, **characterized in that** the interior space (3') forms a deflecting chamber for precipitating water from the air flowing through.

11. Motor vehicle with a water chamber (1) according to one of Claims 1 to 10, **characterized in that** the water chamber (1) is connected via an air duct (23) to an air inlet (22) arranged in a front region of the motor vehicle, and **in that** the passage of air in said duct (23) can be controlled with the unit (24) mentioned.

12. Motor vehicle according to Claim 11, **characterized in that** the unit (35, 24) has a louver, and **in that** said louver can be controlled by the internal pressure in the interior space (3) mentioned.

## Revendications

1. Réservoir d'eau pour un véhicule automobile (28), avec une ouverture d'admission (2) située en haut en position montée, un espace intérieur (3) disposé sous l'ouverture d'admission (2) en position montée, avec au moins un renfoncement (4) en forme de baquet comportant une paroi de fond (5) dans laquelle au moins un renfoncement (4) comporte au moins une ouverture d'évacuation (6) pour évacuer l'eau, **caractérisé en ce qu'**il comporte au moins un moyen de mesure de pression (7) pour commander au moins un agrégat (8, 32, 24), que l'au moins un moyen de mesure de pression (7) est disposé dans la paroi de fond (5), dans l'au moins une ouverture d'évacuation (6), que l'au moins une ouverture d'évacuation (6) comporte un raccord (11) et que l'au moins un moyen de mesure de pression (7) est disposé dans ce raccord (11).

2. Réservoir d'eau selon la revendication 1, **caractérisé en ce que** le moyen de mesure de pression (7) est disposé dans ledit espace intérieur (3) ou relié à celui-ci.

3. Réservoir d'eau selon la revendication 1 ou 2, **caractérisé en ce que** l'au moins un agrégat (8) est une soupape et peut être commandé pour permettre une évacuation de l'eau hors du réservoir d'eau (1).

4. Réservoir d'eau selon l'une quelconque des revendications 1 à 3, **caractérisé en ce qu'**une pression d'air peut être mesurée dans ledit espace intérieur (3) avec l'au moins un moyen de mesure de pression (7).

5. Réservoir d'eau selon la revendication 4, **caractérisé en ce que** l'au moins un moyen de mesure de pression (7) est un capteur électrique ou un moyen de mesure de pression mécanique.

6. Réservoir d'eau selon l'une quelconque des revendications 1 à 5, **caractérisé en ce qu'**une installation d'aération (32), et notamment un ventilateur, peuvent être commandés avec l'au moins un moyen de mesure de pression (7).

7. Réservoir d'eau selon l'une quelconque des revendications 1 à 6, **caractérisé en ce que** l'ouverture d'admission (2) comporte une grille (14) et qu'au moins une propriété de la grille (14) et/ou de l'ouverture d'admission (2) peut être modifiée à l'aide dudit agrégat.

8. Réservoir d'eau selon la revendication 7, **caractérisé en ce que** la grille (14) peut être chauffée ou déplacée ou être modifiée d'une autre façon avec l'agrégat.

9. Réservoir d'eau selon l'une quelconque des revendications 1 à 8, **caractérisé en ce qu'**il comporte une autre ouverture (30) pour l'amenée d'air frais à un habitacle (27).

10. Réservoir d'eau selon la revendication 9, **caractérisé en ce que** l'espace intérieur (3') forme une chambre de déviation pour séparer l'eau de l'air le traversant.

11. Véhicule automobile doté d'un réservoir d'eau (1) selon l'une quelconque des revendications 1 à 10, **caractérisé en ce que** le réservoir d'eau (1) est relié à une admission d'air (22) disposée dans la zone avant du véhicule automobile via un canal d'air (23) et que le passage d'air prévu dans ce canal (23) peut être commandé à l'aide dudit agrégat (24).

12. Véhicule automobile selon la revendication 11, **caractérisé en ce que** l'agrégat (35, 24) comporte un clapet d'air et que ce clapet d'air peut être commandé sur la base de la pression intérieure régnant dans ledit espace intérieur (3).
